(19) Europäisches Patentamt
European Patent Office
Office européen des brevets

(11) EP 3 872 106 A1

(12) **EUROPEAN PATENT APPLICATION**
published in accordance with Art. 153(4) EPC

(43) Date of publication:
**01.09.2021 Bulletin 2021/35**

(21) Application number: **20870433.8**

(22) Date of filing: **04.11.2020**

(51) Int Cl.:
***C08F 290/06*** *(2006.01)* ***C08F 220/28*** *(2006.01)*
***C08F 220/54*** *(2006.01)* ***C09K 3/18*** *(2006.01)*
***D21H 19/20*** *(2006.01)* ***D21H 19/32*** *(2006.01)*
***D06M 13/463*** *(2006.01)* ***D06M 15/263*** *(2006.01)*
***D06M 15/285*** *(2006.01)* ***D06M 15/647*** *(2006.01)*

(86) International application number:
**PCT/JP2020/041204**

(87) International publication number:
**WO 2021/131334 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2019 JP 2019232795**

(71) Applicant: **Showa Denko K.K.**
**Tokyo 105-8518 (JP)**

(72) Inventors:
- **MURATA, Naoki**
**Minato-ku,**
**Tokyo 1058518 (JP)**
- **NAKAGAWA, Yasuhiro**
**Minato-ku,**
**Tokyo 1058518 (JP)**

(74) Representative: **Strehl Schübel-Hopf & Partner**
**Maximilianstrasse 54**
**80538 München (DE)**

(54) **WATER-REPELLING AND OIL-REPELLING AGENT COMPOSITION, WATER AND OIL REPELLENT TREATMENT METHOD, AND WATER-REPELLING AND OIL-REPELLING FIBER**

(57) The invention provides a water- and oil-repellent agent composition which has a high base material absorbability and can impart high oil repellency and water repellency to a base material. The water- and oil-repellent agent composition includes a copolymer (A), a cationic surfactant (B), an aqueous medium (C), and a polyether-modified polydimethylsiloxane (D), wherein particles comprising the copolymer (A) are dispersed in the aqueous medium (C); the copolymer (A) comprises a constitutional unit based on a monomer (a1) consisting of an alkyl (meth)acrylate in which a part other than a (meth)acryloyloxy group is a hydrocarbon structure, and a constitutional unit based on a monomer (a2) consisting of a compound having an ethylenically unsaturated bond and an amide bond; and the polyether-modified polydimethylsiloxane (D) is a compound obtained by substituting a part or all of hydrogen atoms of methyl groups of the polydimethylsiloxane with a polyether chain.

EP 3 872 106 A1

## Description

TECHNICAL FIELD

The present invention relates to a water- and oil-repellent agent composition, a water- and oil-repellent treating method, and a water- and oil-repellent fiber, and further, the present invention relates to a fiber-treating agent, a paper-treating agent, and a coating agent containing the water- and oil-repellent agent composition.
This application claims priority under Japanese Patent Application No. 2019-232795 filed December 24, 2019, the contents of which are incorporated herein by reference.

BACKGROUND TECHNOLOGY

Conventionally, as a method for imparting oil repellency to a base material such as fiber or paper, oil repellency treatment using a water- and oil-repellent agent composition has been performed. The water- and oil-repellent agent composition includes a compound having a perfluoroalkyl group having 8 or more carbon atoms.
However, the compound containing a perfluoroalkyl group having 8 or more carbon atoms may form perfluorooctanoic acid (perfluorooctanoic acid (hereinafter referred to as "PFOA" in some cases)) by decomposition or metabolism. It is required by the U.S. Environmental Protection Agency to reduce a production of perfluorooctanoic acid. Therefore, a water- and oil-repellent agent composition having a compound containing a perfluoroalkyl group having a short carbon chain has been proposed.
For example, Patent Document 1 discloses a water- and oil-repellent agent composition containing a pyrazole block hydrophobic polyisocyanate aqueous dispersion containing a pyrazole block hydrophobic polyisocyanate and a nonionic surfactant, and a water repellency and oil repellency component having a perfluoroalkyl group having 6 or less carbon atoms.
Patent Document 2 describes a water- and oil-repellent agent composition comprising a fluorine-containing polymer having a polyfluoroalkyl group having 1 to 6 carbon atoms, a fluorine-containing polymer having a constitutional unit based on a fluoroolefin, and an aqueous medium.
Furthermore, in recent years, it has also been considered to reduce the use of compounds containing perfluoroalkyl groups having short carbon chains. Therefore, a water- and oil-repellent agent composition containing no fluorine-based compound has been proposed.
For example, Patent Document 3 discloses a water- and oil-repellent agent for fiber treatment which does not contain a fluorine-based compound. In Patent Document 4, a cationic silicone-acrylic resin is investigated.
[Patent Document 1] Japanese Patent Application Laid-Open No. 2012 -031285
[Patent Document 2] International Publication No. WO 2012/020806
[Patent Document 3] International Publication No. WO 2018/163911
[Patent Document 4] Japanese Patent Application Laid-Open No. 2016-102272

SUMMARY OF THE INVENTION

[Problem to be Solved by the Invention]

However, the conventional water- and oil-repellent agent composition which does not contain a fluorine-based compound cannot impart sufficient oil repellency to the base material in some cases. Further, the water- and oil-repellent agent for fiber treatment disclosed in Patent Document 3 uses an anionic material and has few variations in formulation. The manufacturing method disclosed in Patent Document 4 requires a solvent-removing step and is not simple.
It is therefore an object of the present invention to provide a water- and oil-repellent agent composition, which have high base material absorbability and can impart high oil repellency and water repellency to the base material, as well as a fiber-treating agent, a paper treating agent, a coating agent, and a water- and oil-repellent treating method. Another object of the present invention is to provide a water- and oil-repellent fiber having high oil-repellent properties and water-repellent properties.

[Means to Solve the Problem]

The constitution of the present invention for achieving the above object is as follows [15].

[1] A water- and oil-repellent agent composition comprises

a copolymer (A),
a cationic surfactant (B),
an aqueous medium (C), and
a polyether-modified polydimethylsiloxane (D),
wherein particles containing the copolymer (A) are dispersed in the aqueous medium (C);
the copolymer (A) comprises
a constitutional unit based on a monomer (a1) consisting of an alkyl (meth)acrylate in which a part other than a (meth)acryloyloxy group is a hydrocarbon structure; and
a constitutional unit based on a monomer (a2) consisting of a compound having an ethylenically unsaturated bond and an amide bond; and
the polyether-modified polydimethylsiloxane (D) is a compound obtained by substituting a part or all of hydrogen atoms of methyl groups of the polydimethylsiloxane with a polyether chain.

[2] The water- and oil-repellent agent composition according to [1], wherein a content of the cationic surfactant (B) is 0.10 parts by mass or more and 10 parts by mass or less with respect to 100 parts by mass of the copolymer (A), and a content of the polyether-modified polydimethylsiloxane (D) is 0.10 parts by mass or more and 20 parts by mass or less with respect to 100 parts by mass of the copolymer (A).

[3] The water- and oil-repellent agent composition according to [1] or [2], wherein a content of the constitutional unit based on the monomer (a1) in the copolymer (A) is 80 % by mass or more and 99 % by mass or less, and a content of the constitutional unit based on the monomer (a2) in the copolymer (A) is 0.10 % by mass or more and 20 % by mass or less.

[4] The water- and oil-repellent agent composition according to any one of [1] to [3], wherein the cationic surfactant (B) comprises a quaternary ammonium salt.

[5] The water- and oil-repellent agent composition according to any one of [1] to [4], wherein the polyether-modified polydimethylsiloxane (D) has at least one of an alkoxy group and a hydroxyl group at an end of a polyether chain.

[6] The water- and oil-repellent agent composition according to any one of [1] to [5], wherein said monomer (a1) comprises an alkyl (meth)acrylate in which a part other than a (meth)acryloyloxy group is a hydrocarbon structure having 1 to 8 carbon atoms.

[7] The water- and oil-repellent agent composition according to [6], wherein the content of constitutional units based on an alkyl (meth)acrylate, in which a part other than a (meth)acryloyloxy group is a hydrocarbon structure having 1 to 8 carbon atoms, in the copolymer (A) is 50% by mass or more and 99 % by mass or less.

[8] The water- and oil-repellent agent composition according to any one of [1] to [7], wherein said monomer (a1) comprises an alkyl (meth)acrylate in which a part other than a (meth)acryloyloxy group is a chain hydrocarbon structure having 9 or more carbon atoms.

[9] The water- and oil-repellent agent composition according to any one of [1] to [8], wherein the monomer (a2) comprises at least one of acrylamide and methacrylamide.

[10] The water- and oil-repellent agent composition according to any one of [1] to [9], wherein the copolymer (A) comprises a constitutional unit based on a monomer (a3) consisting of a compound having a structure represented by formula (1),

[Chemical Formula 1]

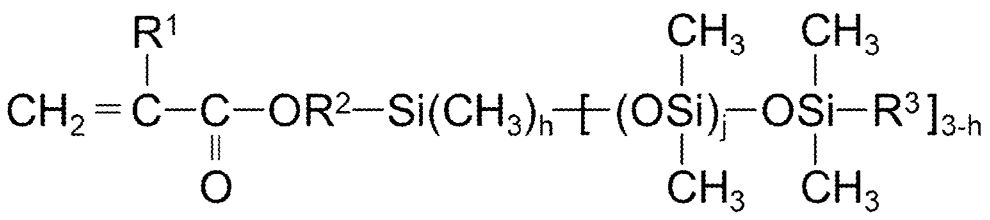

・・・(1)

wherein in the formula (1), $R^1$ represents a hydrogen atom or a methyl group; $R^2$ represents a divalent aliphatic group having 1 to 6 carbon atoms which may include an ether bond; $R^3$ represents an aliphatic group having 1 to 30 carbon atoms, an aromatic group having 1 to 30 carbon atoms, or a hydroxyl group; h represents any one of 0, 1, and 2; and j represents an integer of 0 to 500.

[11] A fiber-treating agent comprising the water- and oil-repellent agent composition according to any one of [1] to [10].

[12] A paper-treating agent comprising the water- and oil-repellent agent composition according to any one of [1] to

[10].

[13] A coating agent comprising the water- and oil-repellent agent composition according to any one of [1] to [10].

[14] A water and oil repellency treating method comprising:

applying the water- and oil-repellent agent composition according to any one of [1] to [10] to a base material; and drying the base material on which the water- and oil-repellent agent composition is applied.

[15] A water- and oil-repellent fiber,
wherein the copolymer (A), the cationic surfactant (B), and the polyether-modified polydimethylsiloxane (D) contained in the water- and oil-repellent agent composition according to any one of [1] to [10] are attached to the fiber serving as a base material.

[Effect of the Invention]

According to the present invention, it is possible to provide a water- and oil-repellent agent composition, which has high base material absorbability and can impart high oil repellency and water repellency to the base material, as well as a fiber-treating agent, a paper treating agent, a coating agent, and a water- and oil-repellent treating method. According to the present invention, it is possible to provide a water- and oil-repellent fiber having high oil-repellent properties and water-repellent properties.

DETAILED DESCRIPTION OF THE INVENTION

Hereinafter, embodiments of the present invention will be described in detail. However, the present invention is not limited to the following embodiments. The configuration described below may be modified as appropriate without departing from the scope of the present invention.

In the following description, the term "monomer" means a compound having a radically polymerizable ethylenically unsaturated bond. The term "ethylenically unsaturated bond" means a double bond between carbon atoms excluding carbon atoms that form an aromatic ring.

"(Meth)acrylic" means "acrylic or methacrylic". "(Meth)acrylate" means "acrylate or methacrylate".

The term "non-volatile component" refers to a component contained in a composition or the like and having a boiling point at 1 atm (1013 hPa) of 130°C or higher.

"Active component" means, when a component in a category is used as a mixture such as a solution or the like, the component in the mixture which falls into that category. For example, an active component in a propylene glycol 1 -monomethyl ether solution of a polyether-modified polydimethylsiloxane refers to all of the compounds of the polyether-modified polydimethylsiloxane in the solution.

<1. Water- and oil-Repellent Agent Composition>

The water- and oil-repellent agent composition of the present embodiment comprises a copolymer (A), a cationic surfactant (B), an aqueous medium (C), and a polyether-modified polydimethylsiloxane (D). The water- and oil-repellent agent composition may contain other components than the above components. In the waterand oil-repellent agent composition, an emulsion (emulsion) in which particles containing a copolymer (A) are dispersed in an aqueous medium (C) is formed. Here, even if the particles containing the copolymer (A) are solid, if they are dispersed in the aqueous medium (C), it is also considered that an emulsion is formed. That is, the particles containing the copolymer (A) may be liquid particles or solid particles.

[1-1. Copolymer (A)]

The copolymer (A) includes a constitutional unit based on a monomer (a1) composed of an alkyl (meth)acrylate in which a part other than a (meth)acryloyloxy group is a hydrocarbon structure and a constitutional unit based on a monomer (a2) composed of a compound having an ethylenically unsaturated bond and an amide bond. Further, the copolymer (A) may have either or both of a constitutional unit based on a monomer (a3) composed of a compound having a structure represented by formula (1), which will be described later; and a constitutional unit based on another monomer (a4) composed of a compound which does not fall under any one of the monomers (a1) to (a3). Hereinafter, each monomer (a1) to (a4) will be described in detail.

[1-1-1 Monomer (a1)]

Since the copolymer (A) has the constitutional unit based on the monomer (a1), a water- and oil-repellent agent composition which can impart high oil repellency to a base material and has good stability can be obtained. The monomer (a1) may contain 1 kind of compound or may contain 2 or more kinds of compounds. That is, the constitutional unit based on the monomer (a1) in the copolymer (A) may contain 1 kind or may comprise 2 or more kinds.

The kind of the compounds contained in the monomer (a1) and the content thereof may be appropriately determined, for example, in order to adjust the glass transition point Tg of the copolymer (A). In order to lower the glass transition temperature of the copolymer (A), a large number of compounds having a low glass transition temperature of the homopolymer may be contained as the monomer (a1). When the glass transition temperature of the copolymer (A) is increased, as the monomer (a1), a large number of compounds having a high glass transition temperature of the homopolymer may be included.

A content of the constitutional unit based on the monomer (a1) in the copolymer (A) is preferably 80% by mass or more, more preferably 90% by mass or more, and still more preferably 95% by mass or more. This is because the water- and oil-repellent agent composition having good stability can be obtained.

In consideration of a content of constitutional units based on monomers other than monomers (a1), the content of constitutional units based on monomers (a1) in the copolymer (A) is preferably 99% by mass or less, more preferably 98% by mass or less.

The monomer (a1) preferably contains an alkyl (meth)acrylate in which a part other than a (meth)acryloyloxy group is a hydrocarbon structure having 1 to 8 carbon atoms. This is because the texture of the base material treated with the water- and oil-repellent agent composition according to the present embodiment can be easily adjusted.

Examples of the alkyl (meth)acrylate in which a part other than a (meth)acryloyloxy group is a hydrocarbon structure having 1 to 8 carbon atoms include methyl (meth)acrylate, ethyl (meth)acrylate, allyl (meth)acrylate, butyl (meth)acrylate, 2-ethylhexyl (meth)acrylate, dimethylhexyl (meth)acrylate and octyl (meth)acrylate.

When the water- and oil-repellent agent composition is used for treating paper or fiber, it is preferable to contain 1 or 2 or more kinds selected from the group consisting of methyl (meth)acrylate, ethyl (meth)acrylate, butyl (meth)acrylate and 2-ethylhexyl (meth)acrylate among the above compounds.

In the copolymer (A), a content of a constitutional unit based on the alkyl (meth)acrylate, in which a part other than a (meth)acryloyloxy group is a hydrocarbon structure having 1 to 8 carbon atoms, is preferably 50% by mass or more, more preferably 60% by mass or more, and still more preferably 70% by mass or more. This is because the texture of the base material treated with the water- and oil-repellent agent composition according to the present embodiment can be easily adjusted.

In consideration of the content of the other constitutional units in the copolymer (A), the content of the constitutional units based on an alkyl (meth)acrylate, in which a part other than a (meth)acryloyloxy group is a hydrocarbon structure having 1 to 8 carbon atoms, is preferably 99% by mass or less, more preferably 98 % by mass or more.

The monomer (a1) may contain an alkyl (meth)acrylate in which a part other than a (meth)acryloyloxy group is a chain hydrocarbon structure having 9 or more carbon atoms. This is because the water- and oil-repellent agent composition can be obtained which gives a base material excellent water repellency while maintaining oil repellency.

Examples of the alkyl (meth)acrylate, in which a part other than the (meth)acryloyloxy group is a chain hydrocarbon structure having 9 or more carbon atoms, include butylhexyl (meth)acrylate, nonyl (meth)acrylate, decyl (meth)acrylate, lauryl (meth)acrylate, tridecyl (meth)acrylate, isostearyl (meth)acrylate and the like. Among these compounds, an alkyl (meth)acrylate having a main chain having 9 or more carbon atoms (hereafter, refer to a long-chain alkyl (meth)acrylate), as the hydrocarbon structure of the part other than the (meth)acryloyloxy group, is preferable. The long chain alkyl (meth)acrylate preferably contains one or both of isostearyl acrylate and lauryl acrylate. This is because the polymerization stability is improved.

When the monomer (a1) contains a long-chain alkyl (meth)acrylate, the content of the constitutional unit based on the long-chain alkyl (meth)acrylate in the copolymer (A) is preferably 0.10 % by mass or more, more preferably 1.0 % by mass or more, and still more preferably 5.0 % by mass or more. This is because a water- and oil-repellent agent composition capable of imparting good water repellency to a base material can be obtained.

The content of the constitutional unit based on the long chain alkyl (meth)acrylate in the copolymer (A) is preferably 20 % by mass or less, more preferably 17 % by mass or less, and still more preferably 15 % by mass or less. This is because it is possible to maintain good texture of a base material treated with a water- and oil-repellent agent composition.

[1-1-2 Monomer (a2)]

Since the copolymer (A) has the constitutional unit based on the monomer (a2), the water- and oil-repellent agent composition can impart high oil repellency to a base material.

Examples of the monomer (a2) include, but are not limited to, acrylamide, methacrylamide, N-vinylacetamide, and the like. The monomer (a2) preferably contains at least either of acrylamide and methacrylamide. The monomer (a2) may contains 1 kind of compound or may contain 2 or more kinds of compounds. That is, the constitutional unit based on the monomer (a2) in the copolymer (A) may comprise 1 kind or may comprise 2 or more kinds.

The content of the constitutional unit based on the monomer (a2) in the copolymer (A) is preferably 0.10% by mass or more, more preferably 0.50% by mass or more, and still more preferably 1.0% by mass or more. This is because a water- and oil-repellent agent composition capable of imparting good oil repellency to a base material can be obtained.

The content of the constitutional unit based on the monomer (a2) in the copolymer (A) is preferably 20 % by mass or less, more preferably 10 % by mass or less, still more preferably 5.0 % by mass or less, and particularly preferably 3.0 % by mass or less. This because it is possible to obtain a water- and oil-repellent agent composition at a low cost and to maintain good water repellency in a base material treated with the water- and oil-repellent agent composition.

[1-1-3 Monomer (a3)]

The monomer (a3) comprises the compound having the structure represented by formula (1).

[Chemical Formula 2]

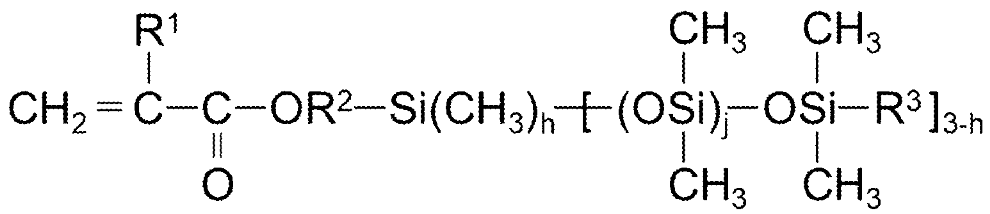

· · · (1)

In formula (1), $R^1$ represents a hydrogen or a methyl group; $R^2$ represents a divalent aliphatic group having 1 to 6 carbon atoms which may include an ether bond; $R^3$ represents an aliphatic group having 1 to 30 carbon atoms, an aromatic group, or a hydroxyl group; h represents any one of 0, 1, and 2; and j represents an integer of 0 to 500. The number of carbon atoms of $R^2$ is preferably 1 to 4. The number of carbon atoms of $R^3$ is preferably 2 to 18. $R^2$ and $R^3$ are more preferably hydrocarbon chains. j is preferably an integer of 10 to 300.

The monomer (a3) may be composed of 1 kind of compound satisfying the condition of formula (1) or may contain 2 or more kinds. The number average molecular weight of the monomer (a3) is preferably 300 or more, more preferably 1,000 or more, and still more preferably 3,000 or more. This is because it possible to maintain good water repellency in a base material treated with a water- and oil-repellent agent composition. The number average molecular weight of the monomer (a3) is preferably 40,000 or less, more preferably 20,000 or less, and still more preferably 15,000 or less. This is because the copolymerizability of the monomer (a3) can be improved.

The content of the constitutional unit based on the monomer (a3) in the copolymer (A) is preferably 0.10 % by mass or more, more preferably 1.0 % by mass or more, and still more preferably 5.0 % by mass or more. This is because a water- and oil-repellent agent composition capable of imparting good water repellency to a base material can be obtained.

The content of the constitutional unit based on the monomer (a3) in the copolymer (A) is preferably 20 % by mass or less, more preferably 10 % by mass or less, and still more preferably 5.0 % by mass or less. This is because it is possible to maintain good texture of a base material treated with a water- and oil-repellent agent composition.

[1-1-4 Other Monomers (a4)]

Other monomers (a4) are compounds which have a polymerizable ethylenically unsaturated bond and are composed of compounds which do not fall under any of monomers (a1) to (a3). The other monomers (a4) include compounds having ethylenically unsaturated bonds and hydrophilic chains, compounds having ethylenically unsaturated bonds and functional groups other than ethylenically unsaturated bonds, and the like. The other monomers (a4) may be composed of 1 kind of compound, and may contain 2 or more kinds of compounds. That is, the constitutional units based on the other monomers (a4) in the copolymer (A) may be composed of 1 kind of constitutional unit or may contain 2 or more kinds of constitutional units.

Examples of the compound having an ethylenically unsaturated bond and a hydrophilic chain include ethylene

glycol di(meth)acrylate, diethylene glycol di(meth)acrylate, polyethylene glycol di(meth)acrylate, propylene glycol di(meth)acrylate, dipropylene glycol di(meth)acrylate, polypropylene glycol di(meth)acrylate and the like.

Examples of the compound having an ethylenically unsaturated bond and a functional group other than the ethylenically unsaturated bond include a compound having an alkoxy group, a compound having an amino group, a compound having a nitrile group, and a salt of a compound having a sulfo group. Examples of the compound having an ethylenically unsaturated bond and an alkoxy group include methoxyethyl (meth)acrylate and butoxyethyl (meth)acrylate. Examples of the compound having an ethylenically unsaturated bond and an amino group include dimethylaminoethyl (meth)acrylate and diethylaminoethyl (meth)acrylate. Examples of the compound having an ethylenically unsaturated bond and a nitrile group include (meth)acrylonitrile. Examples of the salt of the compound having a sulfo group include sodium parastyrenesulfonate.

The other monomers (a4) may include a hydrocarbon compound having an ethylenically unsaturated bond. The hydrocarbon compound having an ethylenically unsaturated bond is preferably a compound in which at least one carbon atom constituting the ethylenically unsaturated bond is directly bonded to a phenyl group from the viewpoint of polymerizability. Examples of such compounds include styrene, β-methylstyrene, divinylbenzene, and the like.

The other monomers (a4) include, for example, compounds having ester bonds such as vinyl acetate and vinyl propionate.

As another monomer (a4), a copolymerizable surfactant may be contained. The copolymerizable surfactant is a compound having a function as a surfactant while having a polymerizable ethylenically unsaturated bond. The copolymerizable surfactant may be any of anionic, cationic, amphoteric, and nonionic surfactant. Considering the role of the cationic surfactant (B) described later, it is preferable that the cationic copolymerizable surfactant is contained as another monomer (a4).

[1-2. Cationic Surfactant (B)]

The kind of the cationic surfactant (B) is appropriately selected according to the kind of the copolymer (A) and the aqueous medium (C).

Examples of the cationic surfactant (B) include alkyltrimethylammonium chloride, cetyltrimethylammonium bromide, laurylpyridinium chloride, and the like. The cationic surfactant (B) preferably contains a quaternary ammonium salt, more preferably a quaternary alkylammonium salt. As the quaternary alkylammonium salt, alkyltrimethylammonium chloride is more preferable.

The content of the cationic surfactant (B) in the water- and oil-repellent agent composition is preferably 0.10 parts by mass or more, more preferably 0.50 parts by mass or more, and still more preferably 0.80 parts by mass or more, with respect to 100 parts by mass of the copolymer (A). This is because it is possible to improve the stability of the emulsion.

The content of the cationic surfactant (B) in the water- and oil-repellent agent composition is preferably 10 parts by mass or less, more preferably 5.0 parts by mass or less, and still more preferably 2.5 parts by mass or less, with respect to 100 parts by mass of the copolymer (A). This is because it is possible to keep good water resistance of a base material treated with the water- and oil-repellent agent composition.

[1-3. Aqueous Medium (C)]

The aqueous medium (C) contains water as an essential component. The aqueous medium (C) may contain a hydrophilic solvent other than water.

Examples of the hydrophilic solvent include alcohols such as methyl alcohol, ethanol, propylene glycol 1-monomethyl ether, n-propyl alcohol, isopropyl alcohol, t-butyl alcohol and benzyl alcohol; and nitrogen-containing organic solvents such as N-methylpyrrolidone. The hydrophilic solvent may contain only one kind or two or more kinds.

The content of the hydrophilic solvent in the aqueous medium (C) is preferably 10 % by mass or less, more preferably 5.0 % by mass or less. This is because it is possible to suppress the cost increase by the use of the solvent.

The content of the aqueous medium (C) in the water- and oil-repellent agent composition is preferably determined so that the non-volatile concentration of the water-and oil-repellent agent composition becomes a desired value. The non-volatile concentration of the water- and oil-repellent agent composition is preferably 10 % by mass or more, more preferably 20 % by mass or more, and still more preferably 30 % by mass or more. This is because it is possible to provide a water- and oil-repellent agent composition which efficiently imparts a water- and oil-repellent effect to a base material using a small amount.

The non-volatile concentration of the water- and oil-repellent agent composition is preferably 70 % by mass or less, more preferably 60 % by mass or less, and still more preferably 50 % by mass or less. This is because the storage stability of the water- and oil-repellent agent composition is improved and the water- and oil-repellent agent composition can be easily uniformly applied to the base material.

[1-4. Polyether-Modified Polydimethylsiloxane (D)]

The polyether-modified polydimethylsiloxane (D) is a compound obtained by substituting a part or the whole of hydrogen atoms of a methyl group of the polydimethylsiloxane with a polyether chain. That is, the polyether-modified polydimethylsiloxane is a graft copolymer having a polysiloxane main chain and a polyether side chain. The polyether-modified polydimethylsiloxane (D) preferably has at least one of an alkoxy group and a hydroxyl group at the end of the polyether chain, and more preferably has a hydroxyl group. This is because it is possible to improve oil repellency of a water- and oil-repellent agent composition.

Preferably, the polyether-modified polydimethylsiloxane (D) has a number average molecular weight of 1,000 to 50,000. A example of commercially available polyether-modified polydimethylsiloxane (D) having a hydroxyl group at the end of a polyether chain includes BYK SILCLEAN 3720 manufactured by BYK, TEGO (registered trademark) Protect 5100N manufactured by Evonik Industries AG, and the like.

The content of the polyether-modified polydimethylsiloxane (D) is preferably 0.10 parts by mass or more, more preferably 0.50 parts by mass or more, and still more preferably 1.5 parts by mass or more, with respect to 100 parts by mass of the copolymer (A). This is because good oil repellency can be imparted to the base material by the water- and oil-repellent agent composition.

The content of the polyether-modified polydimethylsiloxane (D) is preferably 20 parts by mass or less, more preferably 10 parts by mass or less, and still more preferably 5.0 parts by mass or less, with respect to 100 parts by mass of the copolymer (A). This is because it is possible to improve the texture of fibers or paper treated by using the water- and oil-repellent agent composition.

[1-5. Other Components]

Other components that may be included in the water- and oil-repellent agent composition of the present embodiment include other resins, cross-linking agents, thickeners, pH adjusters, film forming aids, plasticizers, preservatives, defoaming agents, surfactants, and the like. The other components may be contained in one or more kinds within the scope of achieving the object of the present invention according to the specification of the water- and oil-repellent agent composition.

<2. Method for Producing Water- and Oil-Repellent Agent Composition>

An example of a method for producing a water- and oil-repellent agent composition of the present embodiment includes a polymerization step of emulsion polymerizing a monomer containing at least a monomer (a1) and a monomer (a2) in the presence of a cationic surfactant (B) in an aqueous medium (C) to obtain an aqueous emulsion, and a mixing step of mixing the aqueous emulsion with a polyether-modified polydimethylsiloxane (D). The method for producing the water- and oil-repellent agent composition according to the present invention is not limited to the method described below. Hereinafter, a monomer serving as a constitutional unit of the copolymer (A) is referred to as a monomer (a).

[2-1. Polymerization Step]

In the polymerization step, the monomer (a), the cationic surfactant (B), and the above-mentioned aqueous medium (C) are mixed and subjected to emulsion polymerization. The monomer (a) includes a monomer (a1) and a monomer (a2), and may also include a monomer (a3) or other monomers (a4).

The content of each monomer in the monomer (a) is the same as the content (% by mass) of each constitutional unit based on each the monomer in the resulting copolymer (A).

The added amount of the cationic surfactant (B) with respect to 100 parts by mass of the monomer (a) is the same as the added amount of the cationic surfactant (B) with respect to 100 parts by mass of the copolymer (A) in the water- and oil-repellent agent composition. All of the cationic surfactant (B) may be added in the polymerization step; or a part of the cationic surfactant (B) may be added in the polymerization step, and the remainder may be added in the subsequent step. And the addition timing of the cationic surfactant (B) is not limited to these steps, and can be appropriately adjusted.

In the polymerization step, a polymerization initiator is preferably used. A hydrogen peroxide, an azo compound, an organic peroxide or the like can be used as the polymerization initiator. A redox initiator may be used in combination of these polymerization initiators and a reducing agent.

The amount of the polymerization initiator to be used is preferably 0.01 parts by mass or more and 1.0 parts by mass or less, more preferably 0.05 parts by mass or more and 0.80 parts by mass or less, and still more preferably 0.1 parts by mass or more and 0.5 parts by mass or less, with respect to 100 parts by mass of total monomers for the copolymer (A) in order to obtain a proper polymerization rate.

In the polymerization step, a chain transfer agent used for adjusting the molecular weight of the copolymer (A) may be added. Examples of the chain transfer agent include mercaptan, thioglycolic acid and its ester, and β-mercaptopropionic acid and its ester.

As the emulsion polymerization method, for example, a method in which the above components are collectively charged and polymerized may be used, or a method in which the components are polymerized while being continuously supplied may be used. An example of the method in which the components are polymerized while being continuously supplied includes, for example, a method in which, in a polymerization initiator solution obtained by mixing a part of the polymerization initiator, the aqueous medium (C), and the cationic surfactant (B), a mixed emulsion obtained by mixing and emulsifying a monomer (a), an aqueous medium (C), and a cationic surfactant (B); and the remainder of the polymerization initiator are continuously supplied and stirred. The temperature at the time of emulsion polymerization may be, for example, 30 to 85°C.

[2-2. Mixing Step]

In the mixing step, the aqueous emulsion obtained in the polymerization step is mixed with the polyether-modified polydimethylsiloxane (D). Examples of the mixing method include, but are not limited to, using a HOMO DISPER MODEL 2.5 (Made by PRIMIX Corporation), stirring at 23°C and 500 rpm for 5 minutes.

<3. Application of Water- and oil-Repellent Agent Composition>

The water- and oil-repellent agent composition of the present embodiment can impart high oil repellency to a base material and has good adsorbability to the base material. The water- and oil-repellent agent composition of the present embodiment can impart high oil repellency and water repellency to a base material such as fiber, paper, glass, etc. Therefore, the water- and oil-repellent agent composition of the present embodiment is preferably used for a fiber-treating agent, a paper treating agent, or a coating agent.

[3-1. Fiber-treating Agent and Water- and Oil-Repellent Fiber]

The fiber-treating agent of the present embodiment may be composed of the waterand oil-repellent agent composition of the present embodiment, and may contain, in addition to the water- and oil-repellent agent composition, other commonly known additives such as defoaming agents, preservatives, pH adjusters, surfactants, crosslinking agents, antistatic agents, wetting agents, thickeners, pigments, and the like as necessary, in an appropriately selected manner so as to achieve the object of the present invention.

In the water- and oil-repellent fiber of the present embodiment, a copolymer (A), a cationic surfactant (B), and a polyether-modified polydimethylsiloxane (D) are attached to the base fiber. The total amount of the components (A), (B) and (D) attached to 100 parts by mass of the fiber serving as a base material is preferably 1.0 parts by mass or more, and more preferably 2.0 parts by mass or more. This is because the water repellency and the oil repellency of the fiber are improved. The total amount of the components (A), (B) and (D) attached to 100 parts by mass of the fiber serving as a base material is preferably 20 parts by mass or less, and more preferably 10 parts by mass or less. This is because it is possible to suppress the deterioration of the texture of fibers and to suppress the increase of the mass of fibers.

Examples of a method for impregnating or applying the fiber-treating agent to fibers serving as a base material include dipping, spray coating, roll coating, and the like. After the fiber is impregnated with the fiber-treating agent, the amount of the fiber-treating agent attached to the fiber is adjusted. An example of a method for adjusting the attached amount includes, but is not limited to, a squeezing method using a mangleroll or the like. The drying temperature after impregnation of the fiber-treating agent is preferably from 80°C to 170°C, more preferably from 90°C to 150°C.

The fiber-treating agent of the present embodiment can impart high oil repellency and water repellency to fibers. The fibers to be treated with the fiber-treating agent may be in any form, such as staple fibers (fiber), linter, roving, sliver, yarn, woven, knitted or nonwoven fiber. Examples of materials of the fibers to be treated include cellulose fibers such as cotton, flax, burlap, hemp, ramie, regenerated cellulose, rayon or the like; polyvinyl alcohol-based synthetic fibers. The fiber preferably contains 30 % by mass or more of the material.

[3-2. Paper Treating Agent, and Water- and oil-repellent Paper]

The components of the paper-treating agent of the present embodiment, the coating method, and the amount of the paper-treating agent attached to the base material are different from those of the fiber-treating agent only in that the base material is paper. In other words, "fiber" is replace with "paper" in the corresponding portion of the description of the fiber-treating agent.

The paper treating agent of the present embodiment can impart high oil repellency and water repellency to paper. The paper to be treated by the paper treating agent is not particularly limited, and for example, a general-purpose paper using pulp cellulose can be used.

[3-3. Coating Agents]

The coating agent of the present embodiment may be composed of the water- and oil-repellent agent composition of the present embodiment, and may contain, in addition to the water- and oil-repellent agent composition, as necessary, commonly known additives such as defoamers, preservatives, pH adjusters, surfactants, crosslinking agents, antistatic agents, wetting agents, thickeners, pigments, and the like, in an appropriately selected manner so as not to impair the object of the present invention.

Examples of the base material to be coated with the coating agent of the present embodiment include glass; polyolefin resin, polyester resin, polycarbonate resin, acrylonitrile butadiene styrene copolymer (ABS resin), polystyrene resin and the like or molded products thereof (film, sheet, cup, etc.); metals; and the like. However, it is not limited to these.

The coating method includes, for example, using a spray, a brush coating, a roller coating, a trowel coating, a dipping, an air knife, a flow coat, a bar coat, a roll coat, a gravure coat, an applicator, and the like.

The drying temperature of the base material coated with the water- and oil-repellent agent composition is preferably 80°C or higher, and more preferably 100°C or higher. This is because drying time can be shortened and high productivity can be obtained. The drying temperature of the base material coated with the water- and oil-repellent agent composition is preferably 170°C or lower, and more preferably 150°C or lower. This is because the water- and oil-repellent agent composition can be prevented from being deteriorated by drying. The drying time can be determined according to the amount of the water- and oil-repellent agent composition applied to the base material, and is not particularly limited.

The coating agent of the present embodiment can impart high water repellency and oil repellency to the base material.

<4. Water- and Oil-Repellent Treating Method>

The water and oil repellency treating method of the present embodiment includes applying the water- and oil-repellent agent composition of the present embodiment to a base material, and drying the base material to which the water- and oil-repellent agent composition is applied.

EXAMPLE

Hereinafter, the present invention will be described more specifically with reference to examples and comparative Examples. The present invention is not limited to the following examples.

<1. Preparation of Compositions>

In a five-neck separable flask equipped with a stirrer, a thermometer, a nitrogen gas introduction tube, a reflux condenser and a dropping funnel, 120 g of ion-exchanged water and 1 g of CATIOGEN (registered trademark) TML (30% by mass aqueous solution of alkyltrimethylammonium chloride, manufactured by Daiichi Kogyo Seiyaku Co., Ltd.) as a cationic surfactant (B) were charged and the temperature was raised to 80°C. This is a first mixture ($\alpha$).

On the other hand, 420 g of ion-exchanged water, 15 g of the cationic surfactant (B) (cationic TML), and a monomer (a) were charged in a 1-liter beaker and dispersed in a homomixer to obtain a second mixture ($\beta$). The mass of each monomer contained in monomer (a) in each Example and Comparative Example is as shown in Tables 1 and 2. The mass of the cationic surfactant (B) and the ion exchange water in Tables 1 and 2 is the sum of the mass contained in the first mixture ($\alpha$) and the mass contained in the second mixture ($\beta$). The aqueous medium (C) may contain, in addition to the ion-exchanged water, a solvent of the aqueous solution of the cationic surfactant (B) or an aqueous solution of a polyether-modified polydimethylsiloxane (D), but the values shown in the column of ion-exchanged water in Tables 1 and 2 are amounts in which these solvents are not contained.

To the first mixture ($\alpha$) kept at 80°C in a five-neck separable flask, 10 g of a 3 % by mass aqueous solution of 2,2'-azobis(2-methylpropionamidine) dihydrochloride (AAPH) was added as a polymerization initiator. Next, while the inside of the flask was kept at 80°C, the mixture was stirred while the second mixture ($\beta$) and 44 g of the 3 % by mass aqueous solution of AAPH were simultaneously dropped from the funnel over 3 hours, and emulsion polymerization was performed. After the dropwise addition, the inside of the flask was kept at 80°C for 1 hour. And then, cooling in the flask was initiated and the mixture was cooled to 30°C to obtain an aqueous emulsion. The values shown in the column for polymerization initiators in Tables 1 and 2 are the sum of the amounts used.

To the aqueous emulsion obtained, a polyether-modified polydimethylsiloxane (D) in the amounts and components shown in Tables 1 and 2 was added to obtain the water- and oil-repellent agent compositions of Examples 1 to 12 and the compositions of Comparative Examples 1 to 5. The non-volatile concentration values shown in Tables 1 and 2 were calculated with respect to the amount of raw materials used. That is, the value is a ratio of the amount of the monomer (a), the cationic surfactant (B) (active component), the polyether-modified polydimethylsiloxane (D) (active component), and the polymerization initiator (active component), with respect to the total amount of the raw materials used (% by mass).

The content of each constitutional unit contained in the copolymer (A) is the same as the content of each monomer contained in the monomer (a).

[Table 1]

| | | | | Example 1 | 2 | 3 | 4 | 5 | 6 | 7 | 8 | 9 | 10 | 11 | 12 |
|---|---|---|---|---|---|---|---|---|---|---|---|---|---|---|---|
| Composition | Copolymer (A) Monomer (a) | Monomer (a1) | Methyl methacrylate [g] | 70 | 70 | 70 | 70 | 70 | 70 | 70 | 72 | 8 | | 70 | 70 |
| | | | Ethyl acrylate [g] | | | | | | | | | | 30 | | |
| | | | Butyl acrylate [g] | | | | | | | | | 382 | 360 | | |
| | | | 2-Ethylhexyl acrylate [g] | 320 | 320 | 320 | 320 | 320 | 320 | 320 | 323 | | | 280 | 280 |
| | | | Isostearyl acrylate [g] | | | | | | | | | | | 40 | |
| | | Monomer (a2) | Acrylamide [g] | 10 | 10 | 10 | | 10 | 10 | 10 | 5 | 10 | 10 | 10 | 10 |
| | | | Methacrylamide [g] | | | | 10 | | | | | | | | |
| | | Monomer (a3) | (*1) Polydimethylsiloxane having methacryloyloxy group [g] | | | | | | | | | | | | 40 |
| | | Other Monomer (a4) | Acrylic acid [g] | | | | | | | | | | | | |
| | Cationic surfactant (B) | | (*2) CATIOGEN TML [g] Value in () indicates amounts of active component | 16 (4.8) | 16 (4.8) | 16 (4.8) | 16 (4.8) | 16 (4.8) | 16 (4.8) | 16 (4.8) | 16 (4.8) | 16 (4.8) | 16 (4.8) | 16 (4.8) | 16 (4.8) |
| | Aqueous medium (C) | | Ion-exchanged water [g] | 540 | 540 | 540 | 540 | 540 | 540 | 540 | 540 | 540 | 540 | 540 | 540 |
| | Polyether-modified polydimethylsiloxane (D) | | (*3) BYK-SILCLEAN 3720 [g] Value in () indicates amounts of active component | 100 (10) | | | 100 (10) | 30 (3) | | | 100 (10) | | | 100 (10) | 100 (10) |

| | | | | | | | | | | | | | | |
|---|---|---|---|---|---|---|---|---|---|---|---|---|---|---|
| | | (*4) TEGO Protect 5100N [g] Value in () indicates amounts of active component | | 100 (10) | | | | 30 (3) | | | 100 (10) | 100 (10) | | |
| | | (*5) KP-109 [g] Value in () indicates amounts of active component | | | 100 (10) | | | | 30 (3) | | | | | |
| | Polymerization initiator | AAPH 3% by mass aqueous solution [g] Value in () indicates amounts of active component | 54 (1.6) | 54 (1.6) | 54 (1.6) | 54 (1.6) | 54 (1.6) | 54 (1.6) | 54 (1.6) | 54 (1.6) | 54 (1.6) | 54 (1.6) | 54 (1.6) | 54 (1.6) |
| | Non-volatile concentration [% by mass] | | 37.5 | 37.5 | 41.1 | 37.5 | 39.4 | 39.4 | 40.5 | 37.5 | 37.5 | 37.5 | 37.5 | 37.5 |
| Oil repellency test | First test | | Best | Best | Better | Best | Best | Better | Good | Best | Best | Best | Best | Best |
| | Second test (contact angle) [°] | | 66 | 65 | 60 | 66 | 66 | 60 | 57 | 66 | 65 | 65 | 72 | 75 |
| Water repellency test | Water repellency test (spray test) | | Grade 2 | Grade 2 | Grade 2 | Grade 2 | Grade 2 | Grade 2 | Grade 2 | Grade 2 | Grade 2 | Grade 2 | Grade 2 | Grade 3 |
| Base material absorbability | Adsorption amount of base material [parts by mass] | | 2.4 | 2.3 | 2.4 | 2.5 | 2.3 | 2.4 | 2.2 | 2.5 | 2.3 | 2.4 | 2.5 | 2.3 |

[Table 2]

| | | | | | Comparative Example | | | | |
|---|---|---|---|---|---|---|---|---|---|
| | | | | | 1 | 2 | 3 | 4 | 5 |
| Composition | Copolymer (A) | Monomer (a) | Monomer (a1) | Methyl methacrylate [g] | 70 | 75 | 75 | 75 | 70 |
| | | | | Ethyl acrylate [g] | | | | | |
| | | | | Butyl acrylate [g] | | | | | |
| | | | | 2-Ethylhexyl acrylate [g] | 320 | 325 | 325 | 325 | 320 |
| | | | | Isostearyl acrylate [g] | | | | | |
| | | | Monomer (a2) | Acrylamide [g] | 10 | | | | |
| | | | | Methacrylamide [g] | | | | | |
| | | | Monomer (a3) | (*1) Polydimethylsiloxane having methacryloyloxy group [g] | | | | | |
| | | | Other Monomer (a4) | Acrylic acid [g] | | | | | 10 |
| | Cationic surfactant (B) | | | (*2) CATIOGEN TML [g] Value in () indicates amounts of active component | 16 (4.8) | 16 (4.8) | 16 (4.8) | 16 (4.8) | 16 (4.8) |
| | Aqueous medium (C) | | | Ion-exchanged water [g] | 540 | 540 | 540 | 540 | 540 |
| | Polyether-modified polydimethylsiloxane (D) | | | (*3) BYK-SILCLEAN 3720 [g] Value in () indicates amounts of active component | | 100 (10) | | | 100 (10) |

| | | | | | | | |
|---|---|---|---|---|---|---|---|
| | | (*4) TEGO Protect 5100N [g] Value in () indicates amounts of active component | | | 100 (10) | | |
| | | (*5) KP-109 [g] Value in () indicates amounts of active component | | | | 100 (10) | |
| | Polymerization initiator | AAPH 3% by mass aqueous solution [g] Value in () indicates amounts of active component | 54 (1.6) | 54 (1.6) | 54 (1.6) | 54 (1.6) | 54 (1.6) |
| | Non-volatile concentration [% by mass] | | 40.2 | 37.5 | 37.5 | 41.1 | 37.5 |
| Oil repellency test | First Test | | Bad | Bad | Bad | Bad | Best |
| | Second Test (contact angle) [°] | | 17 | 25 | 20 | 20 | 66 |
| Water repellency test | Water repellency test (spray test) | | Grade 1 | Grade 1 | Grade 1 | Grade 1 | Grade 2 |
| Base material absorbability | Adsorption amount of base material [parts by mass] | | 2.4 | 2.5 | 2.4 | 2.4 | 1.6 |

(Notes to Tables 1 and 2)

*1: In formula (1), $R^1$ is a methyl group, $R^2$ is a hydrocarbon chain, $R^3$ is an aliphatic hydrocarbon structure, and h = 2. The number average molecular weight was 10,000.

*2: Manufactured by Daiichi Kogyo Seiyaku Co., Ltd. CATIOGEN is a registered trademark. 30 % by mass aqueous solution of alkyltrimethylammonium chloride.

*3: Manufactured by BYK. 10 % by mass propylene glycol 1-monomethyl ether solution of a polyether-modified polydimethylsiloxane having a hydroxyl group at the end of a polyether chain. Hydroxy value of the active component: 29 mg KOH/g.

*4: Manufactured by EVONIK. TEGO is a registered trademark. 10 % by mass dispersed liquid of the polyether-modified polydimethylsiloxane having a hydroxyl group at the end of a polyether chain% by mass. The dispersion medium is water. Hydroxy value of the active component: 25 mg KOH/g.

*5: Manufactured by Shin-Etsu Silicone Co., Ltd. 50 % by mass propylene glycol 1-monomethyl ether solution of polyether-modified polydimethylsiloxane.

<2. Evaluation of Oil Repellency>

The compositions obtained in Examples 1 to 12 and Comparative Examples 1 to 5 were used for the following evaluation. The evaluation results are shown in Tables 1 and 2.

[2-1 First Test]

A 200 mm × 200 mm cotton cloth (Cotton Shirting No.3) was immersed in a composition diluted to 2 times by mass with ion-exchanged water. This was dried in an oven at 130°C for 5 minutes to obtain a test cloth. In each of the Examples and the Comparative Examples, the amount of each component of the compositions (copolymer (A), cationic surfactant (B), and polyether-modified polydimethylsiloxane (D)) after drying attached to 100 parts by mass of the cotton cloth was adjusted to 20 parts by mass.

On one side of the obtained test cloth, 0.03 ml of a test liquid (Nujol) of oil repellency class 1 specified in the oil repellency test of the AATCC Method 118 was dropped, and the condition of the test solution after 1 minute was visually observed. The results were evaluated according to the following criteria. The test cloth and the test solution were prepared at 23 °C. The test solution was placed on the test cloth and visually observed in a constant temperature chamber at 23 °C. The evaluation criteria are as follows.

Best: the test solution holds the ball drops.
Better: the ball drops of the test solution breaks off and the test solution wets and spreads on the test cloth, but does not soak into the test cloth.
Good: the test solution is soaked in the test cloth within more than 30 seconds to 1 minute after the test solution is

left standing.

Bad: the test solution is immersed in the test cloth within 30 seconds after the test solution is left standing.

[2-2 Second Test]

On a glass plate serving as a base material, the composition was applied to a coating thickness of 150 μm (before drying) using an applicator, and dried in an oven at 130°C for 5 minutes to obtain a test specimen (coating material).

On the surface of the test specimen to which the composition was applied, 2 μl of a test liquid (Nujol) of oil repellency class 1 specified in the oil repellency test of the AATCC Method 118 was placed, and the contact angle of the test liquid after 10 seconds was measured by the θ/2 method using an automatic contact angle meter Model CA-VP (Made by Kyowa Interfacial Science Co., Ltd.).

<3. Evaluation of Water Repellency>

The compositions obtained in Examples 1 to 12 and Comparative Examples 1 to 5 were subjected to a water repellency test according to JIS L 1092 (2009) Section 7.2 (spray test). The evaluation criteria are as follows, and the test results are shown in Tables 1 and 2.

Grade 1: state wetting all over the surface.
Grade 2: state wetting on one half of the surface, indicating that small individual wets penetrate the fiber.
Grade 3: state showing small individual water droplets of moisture on the surface.
Grade 4: state not wetting on the surface but showing adhesion of small water droplets.
Grade 5: state showing no moisture or no water droplet on the surface.

<4. Evaluation of Absorbability of Base Material>

Using the compositions obtained in Examples 1 to 12 and Comparative Examples 1 to 5, the adsorbabilities of the base materials were evaluated by the following method. The evaluation results are shown in Tables 1 and 2.

A cotton cloth of 200 mm × 200 mm (Cotton Shirting No.3) was immersed in a composition diluted with ion-exchanged water and having a non-volatile component concentration of 4% by mass. Thereafter, the cotton cloth was pulled up and dried in an oven at 130°C for 5 minutes to obtain a test cloth. The mass of the test cloth was measured, and the amount of each component contained in the composition adsorbed on the base material (adsorption amount of base material) was measured according to the following formula.

$$\text{Adsorption amount of base material [part by mass]} = \{(\text{Mass of test cloth}) - (\text{Mass of untreated cotton cloth})\} \times 100/(\text{Mass of untreated cotton cloth})$$

<5. Evaluation Results>

[5-1. Oil Repellency]

As shown in Tables 1 and 2, in the base materials treated with the water- and oil-repellent agent compositions of Examples 1 to 12, the test solutions (Nujol) hardly penetrated (first test) the base materials, and the values of the contact angle of the test solutions (Nujol) to the droplet were also large (second test). From this, it was found that the water- and oil-repellent agent compositions of Examples 1 to 12 can impart high oil repellency to the base materials.

On the other hand, in the base material treated with the composition of Comparative Example 1 not containing polyether-modified polydimethylsiloxane (D) and the compositions of Comparative Examples 2 to 4 in which the copolymer (A) does not contain the constitutional unit based on the monomer (a2), the test solutions were easily penetrated the base materials, and the values of the contact angle of the test solutions to the droplet were also small.

[5-2. Water Repellency]

As shown in Tables 1 and 2, the base materials treated with the water- and oil-repellent agent compositions of Examples 1 to 12 did not show wetting in a wide range as a result of a water repellency test. From this, it was found that the water- and oil-repellent agent compositions of Examples 1 to 12 can impart high water repellency to the base materials.

On the other hand, as a result of the water repellency test, the base material treated with the composition of Comparative Example 1 not containing polyether-modified polydimethylsiloxane (D) and the compositions of Comparative Example 2 to 4 not using a monomer (a2) having an amide bond and an ethylenically unsaturated bond exhibited wetting over a wide range.

[5-3. Base Material Absorbability]

As shown in Tables 1 and 2, as a result of evaluating the adsorption amount on the base material of the water- and oil-repellent agent compositions of Examples 1 to 12, the components contained in the water- and oil-repellent agent compositions were sufficiently adsorbed on the base materials. From this, it was found that the water- and oil-repellent agent compositions of Examples 1 to 12 had high absorbability to the base material.

As a result of evaluating the base material adsorption amount of the composition of Comparative Example 5 using acrylic acid instead of the monomer (a2) having the amide bond and the ethylenically unsaturated bond, the adsorption amount of the components contained in the composition to the base material was insufficient.

From the above, it has been found that the water- and oil-repellent agent composition according to the present invention has a high base material absorbability and can impart high oil repellency and water repellency to the base material.

## Claims

**1.** A water- and oil-repellent agent composition comprises
a copolymer (A),
a cationic surfactant (B),
an aqueous medium (C), and
a polyether-modified polydimethylsiloxane (D),
wherein particles comprising the copolymer (A) are dispersed in the aqueous medium (C);
the copolymer (A) comprises
a constitutional unit based on a monomer (a1) consisting of an alkyl (meth)acrylate in which a part other than a (meth)acryloyloxy group is a hydrocarbon structure, and
a constitutional unit based on a monomer (a2) consisting of a compound having an ethylenically unsaturated bond and an amide bond; and
the polyether-modified polydimethylsiloxane (D) is a compound obtained by substituting a part or all of hydrogen atoms of methyl groups of the polydimethylsiloxane with a polyether chain.

**2.** The water- and oil-repellent agent composition according to claim 1,
wherein a content of the cationic surfactant (B) is 0.10 parts by mass or more and 10 parts by mass or less with respect to 100 parts by mass of the copolymer (A), and
a content of the polyether-modified polydimethylsiloxane (D) is 0.10 parts by mass or more and 20 parts by mass or less with respect to 100 parts by mass of the copolymer (A).

**3.** The water- and oil-repellent agent composition according to claim 1 or 2,
wherein a content of the constitutional unit based on the monomer (a1) in the copolymer (A) is 80 % by mass or more and 99 % by mass or less, and
a content of the constitutional unit based on the monomer (a2) in the copolymer (A) is 0.10 % by mass or more and 20 % by mass or less.

**4.** The water- and oil-repellent agent composition according to any one of claims 1 to 3,
wherein the cationic surfactant (B) comprises a quaternary ammonium salt.

**5.** The water- and oil-repellent agent composition according to any one of claims 1 to 4,
wherein the polyether-modified polydimethylsiloxane (D) has at least one of an alkoxy group and a hydroxyl group at an end of a polyether chain.

**6.** The water- and oil-repellent agent composition according to any one of claims 1 to 5,
wherein the monomer (a1) comprises an alkyl (meth)acrylate in which a part other than a (meth)acryloyloxy group is a hydrocarbon structure having 1 to 8 carbon atoms.

**7.** The water- and oil-repellent agent composition according to claim 6,
wherein a content of a constitutional unit based on an alkyl (meth)acrylate, in which a part other than a (meth)acryloyloxy group is a hydrocarbon structure having 1 to 8 carbon atoms, in the copolymer (A) is 50% by mass or more and 99 % by mass or less.

**8.** The water- and oil-repellent agent composition according to any one of claims 1 to 7,
wherein the monomer (a1) comprises an alkyl (meth)acrylate in which a part other than a (meth)acryloyloxy group is a chain hydrocarbon structure having 9 or more carbon atoms.

**9.** The water- and oil-repellent agent composition according to any one of claims 1 to 8,
wherein the monomer (a2) comprises at least one of an acrylamide and a methacrylamide.

**10.** The water- and oil-repellent agent composition according to any one of claims 1 to 9,
wherein the copolymer (A) comprises a constitutional unit based on a monomer (a3) consisting of a compound having a structure represented by formula (1),

[Chemical Formula 1]

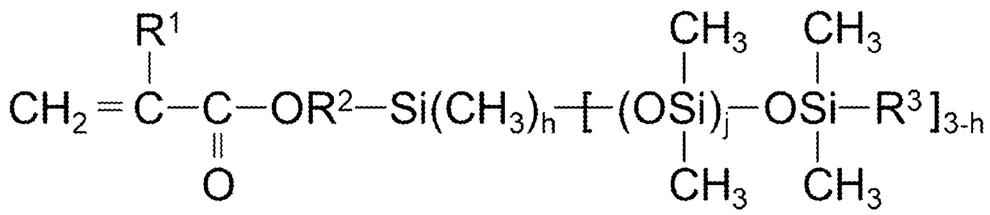

・・・(1)

wherein in the formula (1), $R^1$ represents a hydrogen atom or a methyl group; $R^2$ represents a divalent aliphatic group having 1 to 6 carbon atoms which may include an ether bond; $R^3$ represents an aliphatic group having 1 to 30 carbon atoms, an aromatic group having 1 to 30 carbon atoms, or a hydroxyl group; h represents any one of 0, 1, and 2; and j represents an integer of 0 to 500.

**11.** A fiber-treating agent comprising the water- and oil-repellent agent composition according to any one of claims 1 to 10.

**12.** A paper-treating agent comprising the water- and oil-repellent agent composition according to any one of claims 1 to 10.

**13.** A coating agent comprising the water- and oil-repellent agent composition according to any one of claims 1 to 10.

**14.** A water and oil repellency treating method comprising:

applying the water- and oil-repellent agent composition according to any one of claims 1 to 10 to a base material; and
drying the base material on which the water- and oil-repellent agent composition is applied.

**15.** A water- and oil-repellent fiber,
wherein the copolymer (A), the cationic surfactant (B), and the polyether-modified polydimethylsiloxane (D) contained in the water- and oil-repellent agent composition according to any one of claims 1 to 10 are attached to the fiber serving as a base material.

## INTERNATIONAL SEARCH REPORT

International application No.
PCT/JP2020/041204

A. CLASSIFICATION OF SUBJECT MATTER
Int. Cl. C08F290/06(2006.01)i, C08F220/28(2006.01)i, C08F220/54(2006.01)i, C09K3/18(2006.01)i, D21H19/20(2006.01)i, D21H19/32(2006.01)i, D06M13/463(2006.01)i, D06M15/263(2006.01)i, D06M15/285(2006.01)i, D06M15/647(2006.01)i
FI: C09K3/18 104, D21H19/20 A, D21H19/32, D06M15/647, D06M15/285, D06M15/263, D06M13/463, C08F220/54, C08F220/28, C08F290/06

According to International Patent Classification (IPC) or to both national classification and IPC

B. FIELDS SEARCHED

Minimum documentation searched (classification system followed by classification symbols)
Int. Cl. C08F290/06, C08F220/28, C08F220/54, C09K3/18, D21H19/20, D21H19/32, D06M13/463, D06M15/263, D06M15/285, D06M15/647

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | WO 2018/163911 A1 (SHOWA DENKO KABUSHIKI KAISHA) 13 September 2018, claims, paragraph [0016], examples 1-14 | 1-15 |
| A | WO 2019/163570 A1 (DAIKIN INDUSTRIES, LTD.) 29 August 2019, claims, paragraph [0022], test examples 1-28 | 1-15 |
| A | JP 2019-26747 A (DAIKIN INDUSTRIES, LTD.) 21 February 2019, claims, paragraph [0008], test examples 1-17 | 1-15 |
| A | JP 2018-119250 A (NICCA CHEMICAL CO.) 02 August 2018, claims, paragraphs [0022]-[0025], examples 1-29 | 1-15 |

☒ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21.12.2020 | 28.12.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/041204

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-102272 A (SEIKO PMC CORP.) 02 June 2016, claims, paragraph [0020], examples 1-21 | 1-15 |
| A | JP 2010-501656 A (CLARIANT INTERNATIONAL LTD.) 21 January 2010, claims, paragraph [0011], examples 1-7 | 1-15 |

Form PCT/ISA/210 (continuation of second sheet) (January 2015)

**INTERNATIONAL SEARCH REPORT**
Information on patent family members

International application No.
PCT/JP2020/041204

| Patent Documents referred to in the Report | Publication Date | Patent Family | Publication Date |
|---|---|---|---|
| WO 2018/163911 A1 | 13.09.2018 | US 2020/0010691 A1<br>claims, paragraphs [0053], [0054], examples 1-14<br>EP 3594305 A1<br>CN 110382651 A<br>KR 10-2019-0126313 A<br>TW 201900839 A | |
| WO 2019/163570 A1 | 29.08.2019 | TW 201938751 A | |
| JP 2019-26747 A | 21.02.2019 | (Family: none) | |
| JP 2018-119250 A | 02.08.2018 | (Family: none) | |
| JP 2016-102272 A | 02.06.2016 | (Family: none) | |
| JP 2010-501656 A | 21.01.2010 | US 2009/0325849 A1<br>claims, paragraph [0017], examples 1-7<br>WO 2008/022985 A1<br>EP 2057201 A1<br>KR 10-2009-0076898 A<br>CN 101506257 A<br>RU 2009110774 A<br>TW 200825110 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019232795 A
- JP 2012031285 A
- WO 2012020806 A
- WO 2018163911 A
- JP 2016102272 A